(19) **Europäisches Patentamt**
**European Patent Office**
**Office européen des brevets**

(11) **EP 1 847 086 B1**

(12) **EUROPEAN PATENT SPECIFICATION**

(45) Date of publication and mention
of the grant of the patent:
**30.12.2009 Bulletin 2009/53**

(51) Int Cl.:
***H04L 25/03*** *(2006.01)*

(21) Application number: **06709692.5**

(22) Date of filing: **09.02.2006**

(86) International application number:
**PCT/GB2006/000454**

(87) International publication number:
**WO 2006/085080 (17.08.2006 Gazette 2006/33)**

(54) **Conditioning equaliser input**

Aufbereitung von Entzerrereingaben

Conditionnement d'entrée d'égaliseur

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **11.02.2005 GB 0502910**

(43) Date of publication of application:
**24.10.2007 Bulletin 2007/43**

(73) Proprietors:
• **MStar Semiconductor, Inc**
**Grand Cayman KY1-1003 (KY)**
• **MStar Software R&D (Shenzhen) Ltd**
**High-Tech Industrial Park**
**Shenzhen P.C. 51805 (CN)**
• **MStar France SAS**
**92441 Issy Les Moulineaux (FR)**
• **MStar Semiconductor, Inc**
**Hsinchu Hsien**
**Taiwan 302 (TW)**

(72) Inventors:
• **CHAPMAN, James**
**Cambridge Cambridgeshire CB1 2PR (GB)**

• **VALADON, Cyril**
**Letchworth Hertfordshire SG6 1RG (GB)**

(74) Representative: **Gillard, Matthew Paul et al
Withers & Rogers LLP
Goldings House
2 Hays Lane
London
SE1 2HW (GB)**

(56) References cited:
**EP-A- 1 229 699**

• **BARBERIS M ET AL: "Design of an interference-
resistant equalizer for EDGE cellular radio
systems" VTC 2002-FALL. 2002 IEEE 56TH.
VEHICULAR TECHNOLOGY CONFERENCE
PROCEEDINGS. VANCOUVER, CANADA, SEPT.
24 - 28, 2002, IEEE VEHICULAR TECHNOLGY
CONFERENCE, NEW YORK, NY : IEEE, US, vol.
VOL. 1 OF 4. CONF. 56, 24 September 2002
(2002-09-24), pages 1622-1626, XP010608703
ISBN: 0-7803-7467-3 cited in the application**

**Description**

The invention relates to apparatus for, and to methods of, conditioning communications signals and configuring filters.

In a radio system, a signal travelling between a transmitter and a receiver will be perturbed by the environment in which the transmitter and the receiver exist. The performance of a receiver, i.e. its ability to accurately recover from a received signal information that was put into the signal by a transmitter, depends, to a significant extent, on the ability of the receiver to remove perturbations caused by the environment.

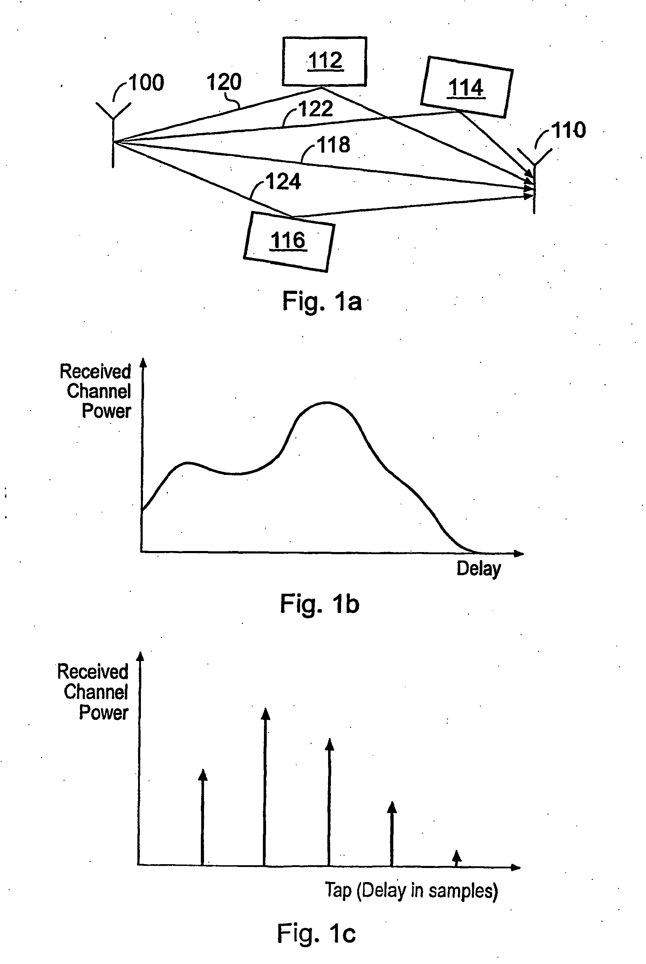

Environmental perturbations of a transmitted signal are usually ascribed to three main sources. These are noise, interference and multipath propagation. Noise may have many sources, including thermal noise from the general environment and circuit noise from within the receiver in question. Interference arises from other signals that are being transmitted in the vicinity of the receiver in question. Multipath propagation arises when a signal reaches a receiver from a transmitter by more than one path. An example of a situation in which multipath propagation occurs is shown in Figure 1.

Figure 1a shows a transmitter 100 attempting to send a radio signal to a receiver 110. Three objects 112, 114 and 116 are located in the vicinity of the transmitter and the receiver 110. The radio signal emitted by the transmitter 100 can reach the receiver 110 by various paths. First, the radio signal can reach the receiver 110 by the direct path 118 leading from the transmitter 100. The radio signal from the transmitter 100 can also reach the receiver 110 by reflection from objections 112 to 116. For example, the radio signal can travel along paths 120, 122 and 124 with reflection from objects 112, 114 and 116, respectively. It will be apparent that the paths 118 to 124 have different lengths with the result that the versions of the radio signal travelling along these paths will arrive at the receiver 110 with differing relative delays.

It is common practice to characterise multipath propagation in terms of a graph showing how the power of a received signal is distributed with delay. Figure 1b illustrates how such a plot might look for a radio signal travelling from transmitter 100 to receiver 110 in the presence of objects 112 to 116. Figure 1b illustrates that the power in the received signal is spread over a range of delays and Figure 1c illustrates a sampled or digitised version of the power versus delay profile of Figure 1b.

Commonly, the information to be conveyed by a radio signal emitted by a transmitter exists in the form of a series of information symbols. Multipath propagation can cause a phenomenon known as intersymbol interference (ISI). ISI occurs when paths leading to a receiver from a transmitter differ in length in a way which causes one information symbol in the radio signal arriving along one path to arrive at the receiver at the same time as another information symbol in the radio signal arriving at the receiver along another path.

ISI can also be introduced by other mechanisms. For example, in an Enhanced Data rates for GSM Evolution (EDGE) system, a filter is used to constrain the bandwidth of a modulated GMSK or 8PSK signal prior to its emission from a transmitter (see, for example, 3GPP TS 45.004 3rd Generation Partnership Project; Technical Specification Group GSM/EDGE; Radio Access Network). Moreover, a signal acquired by a receiver will usually undergo filtering of one form or another (for example, to reject interference in adjacent frequency channels that would otherwise reduce dynamic range). Such filtering mechanisms can be another source of ISI.

It is usual to design a receiver to counteract, in the presence of interference and noise, ISI due to, for example, one or more of multipath propagation, filtering in a transmitter and filtering in a receiver and to estimate the information that was put into the signal by the transmitter that originated the signal. See, for example, "Digital Communications", John G. Proakis, McGraw-Hill International Series, 3rd Edition.

There are many methods of counteracting ISI, which methods are known generically as "equalisation". Among these the following are worthy of note:

1. Linear equalisation (see, for example, "Digital Communicatiorrs", John G. Proakis, McGraw-Hill International Series, 3rd Edition);

2. Maximum-Likelihood Sequence Estimation (MLSE) using the Viterbi algorithm (see, for example, ("Maximum-likelihood sequence estimation of digital sequences in the presence of intersymbol interference", Forney, G., Jr.; IEEE Transactions on Information Theory, Volume: 18, Issue: 3, May 1972 Pages: 363-378);

3. Maximum A-posteriori Probability (MAP) (see, for example, "Optimum and sub-optimum detection of coded data disturbed by time-varying intersymbol interference [applicable to digital mobile radio receivers]", Koch, W.; Baier, A.; Global Telecommunications Conference, 1990, and Exhibition. "Communications: Connecting the Future", GLOBECOM '90., IEEE, 2-5 Dec. 1990 Pages: 1679-1684 vol. 3), and its lower complexity versions, the max-log-MAP; and

4. The soft-output Viterbi Algorithm (SOVA) ("A Viterbi algorithm with soft-decision outputs and its applications", Hagenauer, J.; Hoeher, P.; Global Telecommunications Conference, 1989, and Exhibition. "Communications Technology for the 1990s and Beyond". GLOBECOM '89., IEEE, 27-30 Nov. 1989 Pages: 1680-1686 vol. 3).

A number of reduced complexity ISI suppression methods exist, in particular Reduced State Sequence Estimation (RSSE) (see, for example, "Reduced-state sequence estimation with set partitioning and decision feedback", Eyuboglu, M. V.; Qureshi, S.U.H.; IEEE Transactions on Communications, Volume: 36, Issue: 1, Jan. 1988 Pages: 13-20) which can be of use for higher order modulation schemes such as 8PSK.

In mathematical terms, it is possible to regard a received signal as arriving at a receiver from a transmitter through a channel consisting of a filter describing the various sources of ISI that affect the received signal. In this document, such a filter shall be referred to as a "channel" and the impulse response of such a filter shall be referred to as a "channel response" and an estimate or measurement of such an impulse response shall be referred to as a "channel estimate".

In order for an equaliser to work successfully on a received signal, it is desirable to endow the equaliser with an accurate channel estimate for the signal. This consideration advocates the use of a channel estimate which is at least as long as the true channel. However, the length L of a channel estimate used by an equaliser will directly affect the complexity of the equaliser. In the case of a linear equaliser, the complexity will vary linearly with L. In the case of a SOVA equaliser, the complexity will rise exponentially with L. Thus, the length allowed for a channel estimate in an equalisation scheme is normally limited. If an equaliser uses a channel estimate whose length is shorter than the channel response, then the performance of the equaliser will suffer. In general terms, the greater the proportion of the power of the received signal that lies in the portion of the channel response that lies beyond the length of the channel estimate, the worse the performance of the equaliser will be. For this reason, careful thought must be given to the design of filtering processes in transmitters and receivers to avoid unduly increasing the length of the channel response of signals presented for equalisation.

It has been found that enhanced equalisation performance can be achieved by using an equalisation scheme comprised of a linear equaliser for conditioning a received signal prior to the processing of the signal using a more complicated equalisation scheme, such as a delayed decision feedback sequence estimation (DDFSE) scheme. See, for example, "Design of an interference-resistant equaliser for EDGE cellular radio systems" M. Barberis, S. Heinen, P. Guerra; Vehicular Technology Conference 2002. Proceedings. VTC 2002-Fall. 2002 IEEE 56th, Volume: 3, 24-28 September 2002, Pages: 1622-1626 vol. 3). In such a composite equalisation scheme, the linear equaliser is used to partially remove ISI and to condition noise and interference, thereby aiding the channel estimation and equalisation processes of the succeeding higher complexity equalisation scheme. The inventors of the present patent application have realised that a linear equaliser used in such a capacity must be carefully controlled in order to avoid unduly lengthening the channel response of the signal as perceived by the higher complexity equalisation scheme following the linear equaliser relative to the length of the channel estimate that is used by the higher complexity equalisation scheme.

EP1229699 discloses a method and apparatus for implementing an equaliser which combines the benefits of a decision feedback equaliser (DFE) with a maximum-a-posteriori (MAP) equaliser to provide an equalisation device with significantly lower complexity than a MAP device.

The invention is defined by the appended claims, to which reference should now be made.

According to one aspect, the invention provides apparatus for conditioning a communications signal destined for equalisation by an equaliser, the apparatus comprising a pre-filter located before the equaliser, **characterised in that** the apparatus further comprises means for modifying the filtering characteristic of the pre-filter by convolution with a pulse-shaped impulse response to inhibit lengthening of the channel response of the communications signal by the pre-filter due to multipath structure in said signal.

The invention also consists in a method of conditioning a communications signal destined for equalisation by an equaliser, the method comprising pre-filtering the communications signal prior to the equaliser **characterised in that** the method further comprises modifying the filtering characteristic of the pre-filtering step by convolution with a pulse-shaped impulse response to inhibit lengthening of the channel response of the communications signal by the pre-filtering step due to multipath structure in said signal.

In certain embodiments, the pre-filtering operation is adjusted by causing the signal that is to be subjected to the pre-filtering to contain energy beyond the Nyquist limit effective in the pre-filtering operation.

In certain embodiments, additional filtering is provided in-line with the pre-filter, the additional filtering having a pulse-shaped impulse response.

According to another aspect, the invention provides a method of modifying the filtering characteristic of a pre-filter for an equaliser, wherein the pre-filter is arranged to apply a filtering characteristic to a communications signal destined for equalisation by the equaliser, **characterised in that** the method comprises providing a filtering characteristic which is intended to be deployed in the pre-filter and modifying the filtering characteristic by convolution with a pulse-shaped impulse response to inhibit lengthening of the channel response of the communications signal by the pre-filter when the filtering characteristic is deployed in the pre-filter.

The invention also consists in apparatus for modifying the filtering characteristic of a pre-filter for an equaliser, wherein the pre-filter is arranged to apply a filtering characteristic to a communications signal destined for equalisation by the equaliser **characterised in that** the apparatus comprises means for modifying the filtering characteristic by convolution with a pulse-shaped impulse response to inhibit lengthening of the channel response of the communications signal by the pre-filter when the filtering characteristic is deployed in the pre-filter.

The pre-filtering operation may comprise linear equalisation.

By way of example only, certain embodiments of the invention will now be described with reference to the accompanying drawings, in which:

Figure 1 is a series of diagrams illustrating the principles of multipath propagation;

Figure 2 is a block diagram of a communications system;

Figure 3 is a channel response of a signal containing three multipath components;

Figure 4 is a diagram showing the channel responses of the individual multipath components of Figure 3 superimposed on one another;

Figure 5 is a diagram illustrating channel response impulses corresponding to the multipath structure of Figure 3;

Figure 6 illustrates the distortion that can arise in the channel response of a multipath component after filtering;

Figure 7 illustrates how the distortion shown in Figure 6 can be controlled;

Figure 8 illustrates how the correction shown in Figure 7 can distort the channel responses of other multipath components;

Figure 9 illustrates in more detail the control unit associated with the pre-filter in Figure 2;

Figure 10 illustrates a part of a variant of a system shown in Figure 2;

Figure 11 illustrates a part of a variant of the system shown in Figure 2;

Figure 12 illustrates another variant of the system shown in Figure 2;

Figure 13 illustrates some normalised frequency responses (in each of which the horizontal axis values denote frequency in radians per sample when multiplied by $\pi$) associated with the system shown in Figure 12;

Figure 14 illustrates part of a variant of the system shown in Figure 2; and

Figure 15 illustrates part of a variant of the system shown in Figure 2.

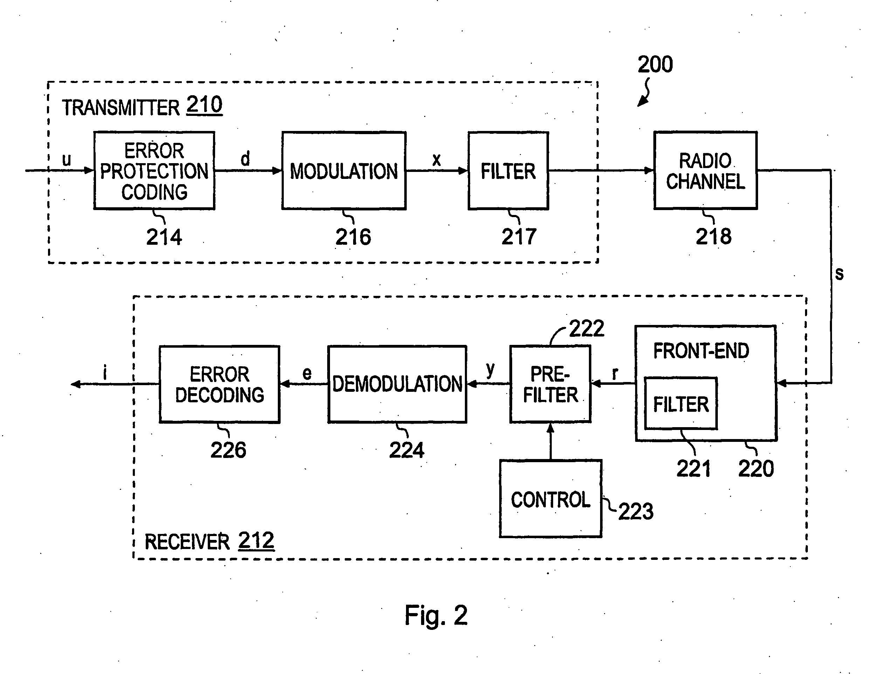

Figure 2 shows an EDGE radio system 200 in which a transmitter 210 attempts to convey an information signal **u** to a receiver 212. The use of bold text denotes that the information signal is a vector consisting of a stream of samples $u_n$ where n=0,1,2,3 ... and the same convention is used below in relation to other signals and some impulse responses.

In the transmitter 210, the information signal u undergoes error protection coding in unit 214 to produce an error-coded signal **d.** An example of error protection coding is the convolutional coding used in an EDGE radio system (see 3GPP TS 45.003 3$^{rd}$ Generation Partnership Project; Technical Specification Group GSM/EDGE; Radio Access Network). The error-coded signal **d** is then supplied to unit 216 where the signal undergoes modulation and becomes modulated signal **x.** The signal **x** then passes through a filter 217. The role of the filter 217 is to constrain the bandwidth of the signal **x.** The impulse response of the filter 217 is **a.** After filtering by filter 217, the signal **x** is emitted from the transmitter 210 and travels through a channel 218 and arrives at the receiver 212 as a signal **s.** The channel describes the effect of the environment on the signal **x** and has a channel response **c.**

In the receiver 212, the signal **s** is initially processed by a front-end section 220. Within the front-end section 220, the signal **s** is filtered by a filter 221. The role of the filter 221 is to reject signals in adjacent frequency channels that might interfere with the desired signal, **s.** The signal **s** emerges from the front-end section 220 as a signal **r,** which is then conditioned by a pre-filter 222 and becomes signal **y** which is then supplied to a demodulation unit 224. The demodulation unit 224 uses a SOVA scheme to equalise the signal **r** as conditioned by the pre-filter 222. The pre-filter 222 is an MSE linear equaliser and its purpose is to partially remove ISI present in signal **r** and to condition the noise and interference present in symbol **r,** thereby aiding the channel estimation and equalisation processes carried out in the demodulation unit 224. The operation of the pre-filter 222 is controlled by control unit 223, whose function will be described later. Together, the pre-filter 222 and the SOVA scheme used in the demodulation unit 224 constitute a composite equalisation scheme. A demodulated version **e** of the signal **r** emerges from the demodulation unit 224 and proceeds to an error decoding unit 226. The error decoding unit 226 utilises knowledge about the error protection coding applied by unit 214 in the transmitter 200 in order to produce a signal **i** that is an estimate of the information signal **u.**

It will be apparent that most of the signal processing shown in Figure 2 occurs in the digital domain with digital to analogue and analogue to digital conversion occurring before filter 217 and after filter 221, respectively.

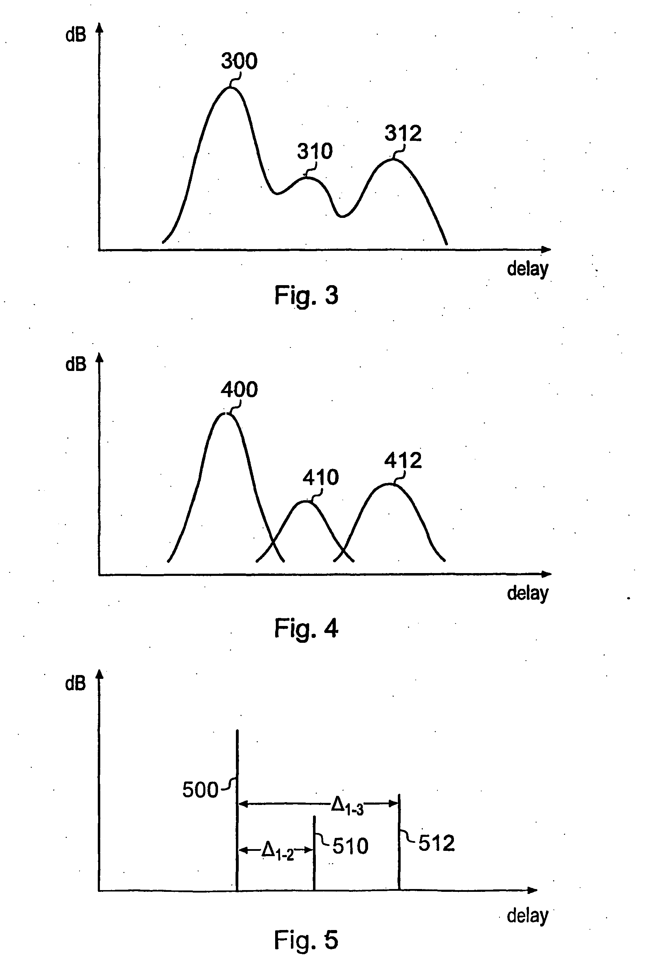

The signal **r** that enters the composite equalisation scheme can be thought of as a version of the signal **x** that has arrived through a channel having a channel response **h,** where **h** has the form **h** = **a**⊗**c**⊗**b,** where ⊗ denotes the convolution operation. An example form for the signal channel response **h** is shown in Figure 3. In the example shown, the channel response **r** contains three contains three multipath components **r₁, r₂** and **r₃.** These multipath components manifest themselves as peaks 300, 310 and 312. The channel response **h** is a summation of the channel responses of the individual mulitpath components such that **h** = **h₁** + **h₂** + **h₃** where **h₁, h₂** and **h₃** are the channel responses of the multipath components **r₁, r₂** and **r₃,** respectively. The channel responses **h₁, h₂** and **h₃** are shown superimposed on one another in Figure 4 as curves 400, 410 and 412, respectively.

The pre-filter 222 has an impulse response **p.** If one notionally decomposes **r** into its multipath components **r₁, r₂** and **r₃** and considers the pre-filter 222 as acting on the multipath components **r₁, r₂** and **r₃** individually, then, at the output of the pre-filter, the channel response of **r₁** becomes **p**⊗**h₁** = **g₁,** the channel response of **r₂** becomes **p**⊗**h₂** = **g₂** and the channel response of **r₃** becomes **p**⊗**h₃** = **g₃.** Ideally, the pre-filter 222 operates to produce residual channel responses **g₁, g₂** and **g₃** in the form of single impulses denoting the positions of the multipath components **r₁, r₂** and **r₃** in the channel response **h.** In order for the pre-filter 222 to produce such a result, however, it is required that r is such that **h₁** = **j**⊗**g₁, h₂** = **j**⊗**g₂** and **h₃** = **j**⊗**g₃** where **g₁, g₂** and **g₃** are single impulses and that **p** can be set to a vector **w** where **w** is such that **w**⊗**j**⊗**x** = **x** where **x** is an arbitrary signal. For the sake of clarity in the following description of the function of control unit 223, assume now that **r** conforms to the requirements stated in the previous sentence. The three impulses **g₁, g₂** and **g₃** are shown superposed in Figure 5, as impulses 500, 510 and 512, respectively.

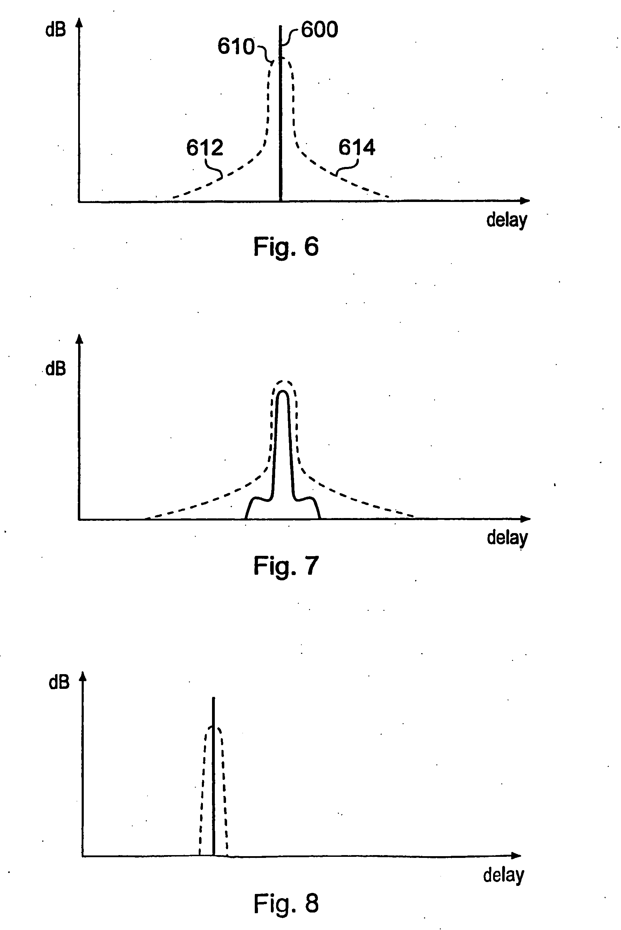

Since the pre-filter 222 performs filtering in the digital domain with a finite sample rate, the pre-filter can only produce an approximation **w'** of the impulse response **w** required to convert **h₁, h₂** and **h₃** into the single impulses **g₁, g₂** and **g₃.** Assume now that **w'** is designed to operate on **r₁** to convert **h₁** into a residual channel response **g₁'** that is a single impulse, i.e. **g₁'** = **g₁.** The channel response **g₁'** is shown in Figure 5, in which the single impulse is labelled 500. The pre-filter 222 with its impulse response **w'** will also operate on multipath components **r₂** and **r₃** to convert **h₂** and **h₃** into residual channel responses **g₂'** and **g₃',** respectively. Whether or not the pre-filter 222 produces **g₂'** in the form of a single impulse that maps on to **g₂** will depend on the separation Δ₁₋₂ between **g₁** and **g₂,** shown in Figure 5, and enumerated in terms of a number of sample periods of the pre-filter 222. If Δ₁₋₂ is an integer number, then **g₂'** will be a single impulse that maps on to **g₂.** This result is shown in Figure 6 as impulse 600. However, if Δ₁₋₂ is an non-integer number, then **g₂'** will be broadened from an impulse into the curve shown in Figure 6 as a broken line and having a peak 610 and slowly decaying tails 612 and 614. The situation as regards **g₃'** and its conformation to **g₃** is dependent in an analogous manner on the separation Δ₁₋₃, again shown in Figure 5, between **g₁** and **g₃.**

It will be apparent that, largely due to the slowly decaying tails 612 and 614, many more taps are required to describe the residual channel response represented by the broken line in Figure 6 than the single tap that is required to characterize impulse 600. Consequently, due to the finite sampling rate of the pre-filter 222, the channel response of signal **r** at the output of the pre-filter is likely to contain peaks encumbered with slowly decaying tails in place of impulses 510 and 512. Thus, the application of pre-filter 222 can result in a channel response that is longer than the length of the estimate used in demodulation 224; this worsens the performance of the receiver.

In order restore efficacy to the pre-filter 222, the pre-filter is configured by the control unit 223 so that the pre-filter does not have impulse response **w'** but rather has an impulse response **w"** = **w'**⊗**q** where **q** is an impulse response in the form of a Gaussian pulse having a shape proportional to:

$$e^{-\frac{t^2}{\alpha T^2}}$$

where t is the sample count and T is the sampling interval of the pre-filter 222.

Accordingly, the pre-filter 222 now performs the operations **w'**⊗**h₁**, **w"**⊗**h₂** and **w"**⊗**h₃** on the multipath components **r₁, r₂** and **r₃** respectively to produce residual channel responses **g₁", g₂"** and **g₃"** respectively.

The residual channel response **g₂"** is shown in Figure 7 alongside **g₂'.** The former is shown as a solid line and the latter as a broken line. It will be apparent that the tails are greatly suppressed in **g₂"** when compared to **g₂'.** Therefore, fewer taps are required to characterize the residual channel response **g₂"** than are required to characterize the response **g₂'.** The effect of **w"** on **h₁** is shown in Figure 8, in which **g₁'** is shown as a solid line and **g₁"** is shown as a broken line. It will be apparent that the single impulse of **g₁'** has in **g₁"** broadened and lowered into a peak of appreciable thickness. (The appearance of **g₃"** will, of course, depend on the separation Δ₁₋₃ in the same way that **g₂"** depends on **g₂'.** However, the residual channel response **g₃'** is not shown or described here for the sake of brevity.)

The width $\frac{1}{\alpha}$ of the Gaussian pulse in **q** controls the degree of suppression of the tails in **g₂"** and the broadening of the peak in **g₁'.** The smaller α becomes, the less severe the suppression of the tails in **g₂"** will become and the narrower the peak in **g₁"** will become. Conversely, the greater a becomes, the greater the suppression of the tails will become in **g₂"** and the broader the peak in

$\mathbf{g_1}''$ will become. It is usually possible to choose a value of $\alpha$ that provides a useful compromise in terms of the tail suppression and the peak broadening through trial and error in order to ensure that the pre-filter 222 succeeds in reducing the length of the channel response $\mathbf{z}$ of signal $\mathbf{y}$.

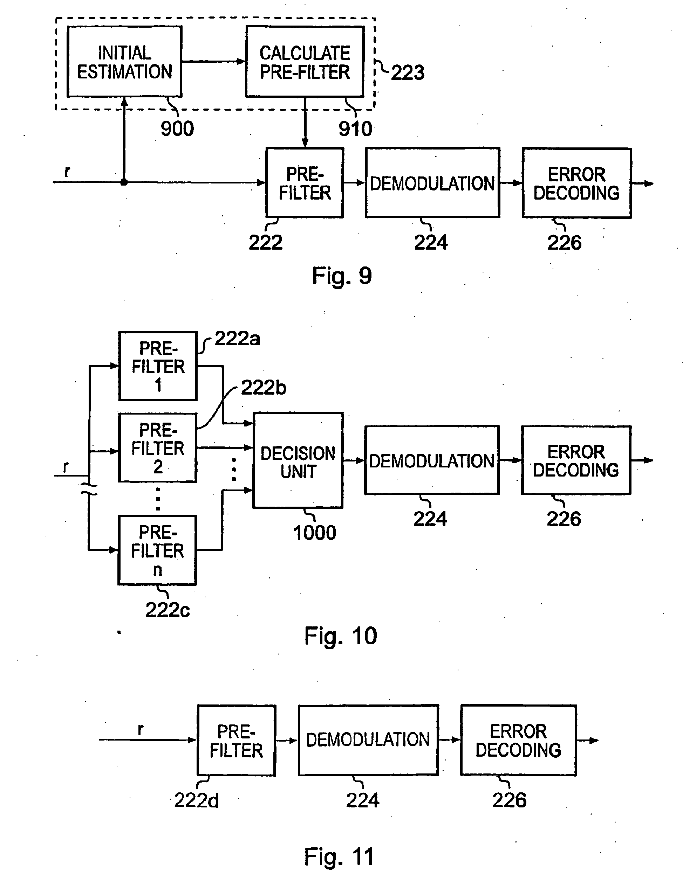

The shaping of the Gaussian pulse within $\mathbf{q}$ is dictated by control unit 223. The control unit 223 is shown in more detail in Figure 9. In addition to application to pre-filter 222, the signal $\mathbf{r}$ is also applied to an estimation unit 900 within the control unit 223. Estimation unit 900 calculates some metrics of the signal r and supplies them to filter configuration unit 910. Filter configuration unit 910 periodically recalculates $\mathbf{w'}$, $\alpha$, $\mathbf{q}$ and $\mathbf{w}''$ and reconfigures the pre-filter 222 to operate with the new version of $\mathbf{w}''$ thus obtained. In simpler variants, $\mathbf{w}''$ or $\mathbf{q}$ is fixed at a form derived by trial and error research.

Some alternatives to the pre-filter 222 and its control unit 223 will now be described with reference to Figures 10, 11, 14 and 15.

In Figure 10, the pre-filter 222 and its control unit 223 are replaced by a group of pre-filters 222a to c and a decision unit 1000. The pre-filters 222a to c have differing impulse responses $\mathbf{p_a}$, $\mathbf{p_b}$ and $\mathbf{p_c}$, respectively, and they operate in parallel on signal r to produce signals $\mathbf{s_a}$, $\mathbf{s_b}$ and $\mathbf{s_c}$, respectively. The decision unit 1000 calculates a quality metric $\mu$ for each of signals $\mathbf{s_a}$, $\mathbf{s_b}$ and $\mathbf{s_c}$ and supplies the one of these signals with the best value of $\mu$ to the demodulation unit 224 for further processing. The quality metric $\mu$ can be, for example, a noise power value calculated by first estimating the channel of a signal from a section of the signal containing a training sequence. This channel estimate is then convolved with the known training sequence and the result is subtracted from the section of the signal that was used to produce the channel estimate. The power in the residual signal section thus produced yields a value for $\mu$. At least one of the impulse responses $\mathbf{p_a}$, $\mathbf{p_b}$ and $\mathbf{p_c}$ is derived in the same manner as $\mathbf{w}''$ in the system of Figure 2, i.e. involving convolution with a Gaussian pulse in order to suppress in the manner shown in Figure 7 tails of the kind described with reference to Figure 6. Since the impulse responses $\mathbf{p_a}$, $\mathbf{p_b}$ and $\mathbf{p_c}$ are fixed, the arrangement shown in Figure 10 avoids the data processing overheads associated with the periodic recomputation of $\mathbf{w}''$ by control unit 223.

In Figure 11, the control unit 223 is omitted and the adjustable pre-filter 222 is replaced with pre-filter 222d that uses a fixed, predetermined impulse response $\mathbf{p_d}$ having the form $\mathbf{w} \otimes \mathbf{q_d}$ where $\mathbf{w} \otimes [\mathbf{a} \otimes \mathbf{b}] = 1$ and $\mathbf{q_d}$ is proportional to a Gaussian pulse and is included to suppress in the manner shown in Figure 7 tails of the kind shown in Figure 6. It will be recalled that a and b are the known impulse responses of filters 217 and 221, respectively.

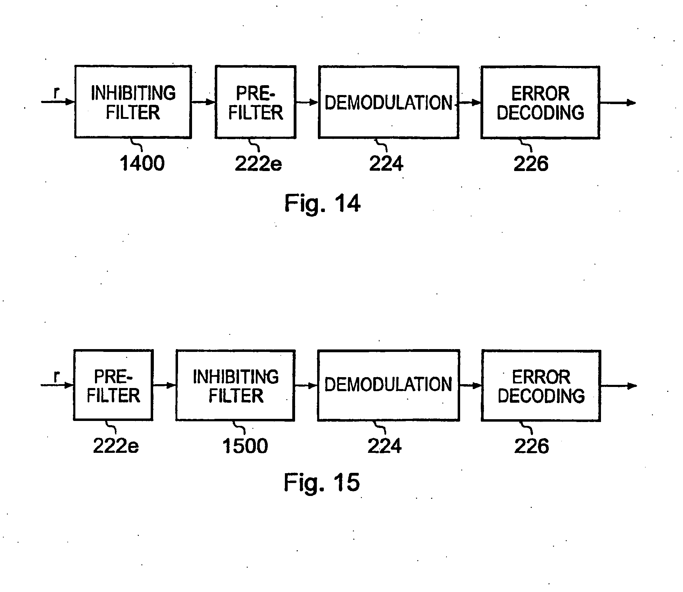

In Figure 14, instead of arranging that the pre-filter impulse response is modified by convolution with a Gaussian pulse, the pre-filter 222e is preceded by an inhibiting filter 1400 that has an impulse response in the shape of a Gaussian pulse. Together, pre-filter 222e and inhibiting filter 1400 have the same effect as pre-filter 222 in Figure 1. For example, given the scenario used in conjunction with Figure 2 wherein the pre-filter is given an impulse response $\mathbf{w'} \otimes \mathbf{q}$, the pre-filter 222e in Figure 14 would be given impulse response $\mathbf{w'}$ and the inhibiting filter 1400 would be given impulse response $\mathbf{q}$. It will be apparent to the skilled person that the inhibiting filter 1400 can be implemented with an impulse response that is, for example, periodically recalculated in an analogous manner to the recalculation of $\mathbf{q}$ as described in Figure 9, selected from amongst a number of available impulse responses in an analogous manner to the selection process performed by the decision unit 1000 in Figure 10, or fixed in analogy with impulse response $\mathbf{q_d}$ in Figure 11. It will also be apparent to the skilled person that the inhibiting filter could be relocated to a position following the pre-filter 222, as shown in Figure 15 (in which the inhibiting filter is relabelled 1500).

In the systems described with reference to Figures 2, 10 and 11, a Gaussian pulse is used in a convolution step to control tail growth in the channel response $\mathbf{z}$ of signal $\mathbf{y}$ and, in the systems described with reference to Figures 14 and 15, an inhibiting filter with an impulse response in the shape of a Gaussian pulse is likewise used to control tail growth in channel response $\mathbf{z}$. It will, however, be apparent to the skilled person that other kinds of pulse shape can be used in place of the Gaussian pulse and yet achieve the same result in controlling the length of the channel response $\mathbf{z}$. For example, the pulse could be square, triangular or raised cosine in shape, the efficacy of the pulse depending on its precise shape.

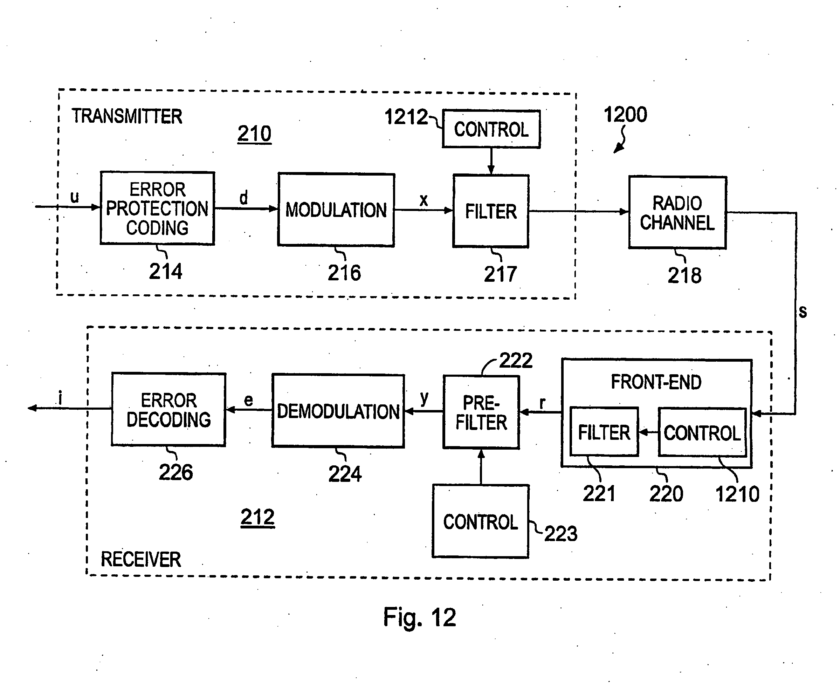

In another variant of the scheme described with reference to Figure 2, $\mathbf{w}$ does not attempt to eliminate the effect of $\mathbf{a}$ and $\mathbf{b}$ but only $\mathbf{a}$ such that $\mathbf{w} \otimes \mathbf{a} = 1$. By arranging the pre-filter 222 to counteract $\mathbf{a}$, the co-channel interference affecting $\mathbf{r}$ is whitened and this can benefit the operation of the SOVA equaliser operating on signal $\mathbf{y}$ within demodulation unit 224. Another variant of system 200 is shown in Figure 12. Reference symbols in Figure 12 that appear in Figure 2 continue to denote the same features as in Figure 2. For the purpose of simplifying the following discussion of the EDGE system 1200 shown in Figure 12, assume that signal r has the structure described with reference to Figure 3 and that the three multipath components $\mathbf{r_1}$, $\mathbf{r_2}$ and $\mathbf{r_3}$ again have channel responses $\mathbf{j} \otimes \mathbf{g_1}$, $\mathbf{j} \otimes \mathbf{g_2}$ and $\mathbf{j} \otimes \mathbf{g_3}$, respectively, where, as before, $\mathbf{g_1}$, $\mathbf{g_2}$ and $\mathbf{g_3}$ are single impulses and $\Delta_{1\text{-}2}$ denotes the separation between impulses $\mathbf{g_1}$ and $\mathbf{g_2}$ and $\Delta_{1\text{-}3}$ denotes the separate between impulses $\mathbf{g_1}$ and $\mathbf{g_3}$.

It will be recalled that in the system 200 the configuration of the pre-filter 222 with an impulse response $\mathbf{w'}$ having the property $\mathbf{w'} \otimes \mathbf{j} \otimes \mathbf{g_1} = \mathbf{g_1}$ is rejected in favour of a configuration $\mathbf{w}'' = \mathbf{w'} \otimes \mathbf{q}$, where $\mathbf{q}$ has a Gaussian pulse shape, in order to inhibit the lengthening of the channel response **z** of signal **y**. In system 1200, however, the control unit 223 configures the pre-filter 222 to have an impulse response **w'** having the property $\mathbf{w'}\otimes\mathbf{j}\otimes\mathbf{g_1} = \mathbf{g_1}$ and undesirable growth in the length of **z** is instead inhibited through the agency of filters 217 and 221, as will now be described.

The filters 217 and 221 with their impulse responses **a** and **b** respectively can, notionally, be replaced with a single filter F whose impulse response **k** is **a**⊗**b**. Conventionally, the filter 221 includes anti-aliasing filtering so that the frequency response of notional filter F is quiescent beyond the Nyquist limit of the pre-filter 222. However, in system 1200, the filters 217 and 221 are arranged such that notional filter F has a non-zero response in the part of its frequency response that lies beyond the Nyquist limit of the pre-filter 222. This extension of the frequency response of notional filter F causes aliasing in the operation of the pre-filter 222 which, in turn, leads to suppression of the spreading effect in the channel response **z** of signal **y** that will arise if either or both of the alignments $\Delta_{1-2}$ and $\Delta_{1-3}$ have non-integer values.

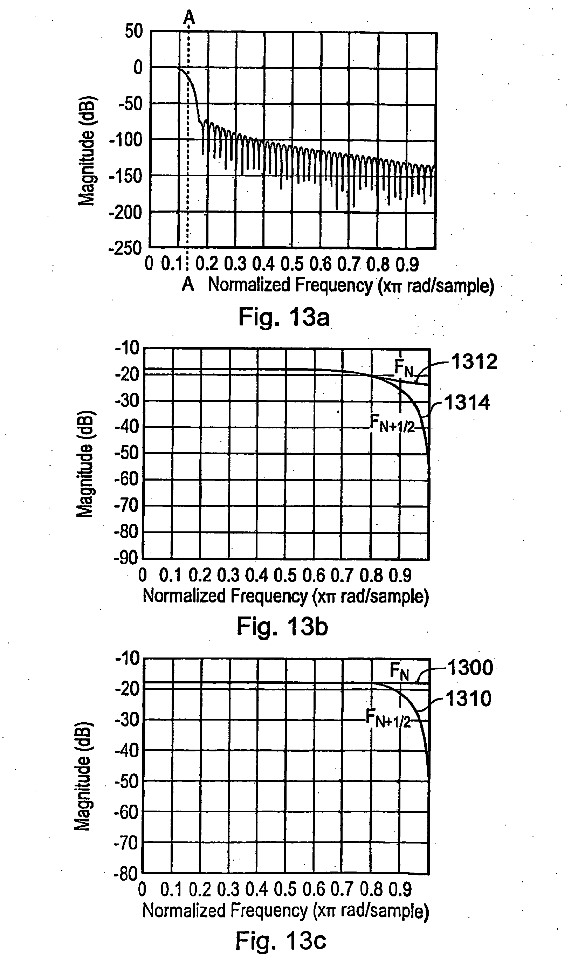

An example of the frequency response of notional filter F in system 1200 is shown in Figure 13a. The frequency response shown there is sampled at a rate eight times higher than the sampling rate of the pre-filter 222 and features a non-zero response beyond the Nyquist limit of pre-filter 222, indicated by line A-A. Figure 13b shows two curves 1312 and 1314 which illustrate how the response of the notional filter F would appear to a signal at the sample rate used by the pre-filter 222. Curve 1312 applies when the samples of the signal are aligned with the taps of the notional filter F and curve 1314 applies when the samples of the signal experiencing filter F are offset by a fraction of a sample relative to the taps of filter F. It will be apparent that curve 1314 drops away from curve 1312 at higher frequencies and the effect of this difference on the operation of the pre-filter 222 will now be described.

For the sake of simplicity, assume now that **j = k** such that the pre-filter 222 performs the convolutions $\mathbf{w'}\otimes(\mathbf{k}\otimes\mathbf{g_1})$ to produce $\mathbf{g_1}'$, $\mathbf{w'}\otimes(\mathbf{k}\otimes\mathbf{g_2})$ to produce $\mathbf{g_2}'$ and $\mathbf{w'}\otimes(\mathbf{k}\otimes\mathbf{g_3})$ to produce $\mathbf{g_3}'$ for the three multipath components. Curve 1300 in Figure 13c is the frequency domain representation of impulse response $\mathbf{w'}\otimes\mathbf{k}\otimes\mathbf{g_1}$ sampled at the sampling rate of the pre-filter 222. As is apparent from Figure 13c, curve 1300 is flat and this characteristic corresponds to a single impulse in the time domain, which is indeed the result of $\mathbf{w'}\otimes\mathbf{k}\otimes\mathbf{g_1}$ since it will be recalled that **w'** is designed to convert $\mathbf{h_1}$ into the pure impulse $\mathbf{g_1}$. If $\Delta_{1-2}$ is integer, then $\mathbf{w'}\otimes\mathbf{h_2}$ will map to pure impulse $\mathbf{g_2}$ and the frequency response of $\mathbf{w'}\otimes\mathbf{h_2}$ (i.e. of $\mathbf{w'}\otimes\mathbf{k}\otimes\mathbf{g_2}$) will match curve 1300.. However, if $\Delta_{1-2}$ is non-integer; then $\mathbf{w'}\otimes\mathbf{h_2}$ will behave like curve 1310 and, after initially conforming to curve 1300, drop away due to the aliasing within the pre-filter 222 of the non-zero frequency response of **k** beyond the Nyquist limit of the pre-filter 222. In the time domain, this drop translates into a suppression, as in Figure 7, of the tails that form around the peak in the residual channel response $\mathbf{w'}\otimes\mathbf{k}\otimes\mathbf{g_2}$. The frequency response of $\mathbf{w'}\otimes\mathbf{k}\otimes\mathbf{g_3}$ likewise depends on the value of $\Delta_{1-3}$.

The system 1200 includes additional control units 1212 and 1210 for adjusting filters 217 and 221, respectively, for the purpose of adjusting **k** to manipulate the drop in the curve 1310 so as to produce a desired degree of tail suppression in residual channel responses responses $\mathbf{g_2}'$ and $\mathbf{g_3}'$. In practice, trial and error would be used to find settings for filters 217 and 221 that are optimum in terms of a balance between the degree of tail suppression in $\mathbf{g_2}'$ and $\mathbf{g_3}'$ and other operating criteria. In certain embodiments, only **b** is rendered adjustable for the purpose of varying **k**.

Several embodiments of the invention have now been described in which tail growth is suppressed in the channel response of the output of a pre-filter to an equalisation scheme. It will be apparent to the skilled person that many other variants of the invention exist. For example, the described embodiments assume that the information transmitted between the transmitter and receiver is formatted in blocks of bits rather than as a continuous stream. It will, however, be apparent that the invention is applicable to systems in which the information is transmitted as a continuous stream. Furthermore, it will be appreciated that the various units that operate on digital signals, for example, units 214 and 224, can be implemented as hardware structures or as software running on a general data processor or used in conjunction with customised data processing hardware.

## Claims

1. Apparatus (212) for conditioning a communications signal destined for equalisation by an equaliser, the apparatus (212) comprising a pre-filter (222) located before the equaliser, **characterised in that** the apparatus further comprises means (223) for modifying the filtering characteristic of the pre-filter by convolution with a pulse-shaped impulse response to inhibit lengthening of the channel response of the communications signal by the pre-filter (222) due to multipath structure in said signal.

2. Apparatus according to claim 1 further comprising filtering means which is located before the pre-filter and which is arranged to cause the communications signal, at the pre-filter input, to contain energy in a frequency region beyond the Nyquist limit of that signal to cause aliasing in the pre-filter that inhibits said lengthening.

3. Apparatus according to claim 1 or 2, wherein the modifying means comprises means in line with the pre-filter for applying to the communications signal filtering having a pulse-shaped impulse response to inhibit said lengthening by said pre-filter.

**4.** Apparatus according to any one of claims 1 to 3, wherein said pulse is Gaussian.

**5.** Apparatus according to any one of claims 1 to 4, wherein the pre-filter is a linear equaliser.

**6.** A method of conditioning a communications signal destined for equalisation by an equaliser, the method comprising pre-filtering the communications signal prior to the equaliser **characterised in that** the method further comprises modifying the filtering characteristic of the pre-filtering step by convolution with a pulse-shaped impulse response to inhibit lengthening of the channel response of the communications signal by the pre-filtering step due to multipath structure in said signal.

**7.** A method according to claim 6, further comprising filtering the communications signal prior to the pre-filtering step such that the communications signal, as supplied to the pre-filtering step, contains energy in a frequency region beyond the Nyquist limit of the signal to cause aliasing in the pre-filtering step that inhibits said lengthening.

**8.** A method according to claim 6 or 7, wherein the modifying step comprises a step of applying to the communications signal in line with the pre-filter filtering having a pulse-shaped impulse response to inhibit said lengthening by said pre-filter.

**9.** A method according to claim 7 or 8, wherein said pulse is Gaussian.

**10.** A method according to any one of claims 6 to 9, wherein the pre-filtering step performs linear equalisation of the communications signal.

**11.** A method of modifying the filtering characteristic of a pre-filter (222) for an equaliser, wherein the pre-filter (222) is arranged to apply a filtering characteristic to a communications signal destined for equalisation by the equaliser, **characterised in that** the method comprises providing a filtering characteristic which is intended to be deployed in the pre-filter (222) and modifying the filtering characteristic by convolution with a pulse-shaped impulse response to inhibit lengthening of the channel response of the communications signal by the pre-filter when the filtering characteristic is deployed in the pre-filter.

**12.** A method according to claim 11, wherein said pulse is Gaussian.

**13.** A method according to claim 11 or 12, wherein said pre-filter is a linear equaliser.

**14.** Apparatus for modifying the filtering characteristic of a pre-filter (222) for an equaliser, wherein the pre-filter (222) is arranged to apply a filtering characteristic to a communications signal destined for equalisation by the equaliser, **characterised in that** the apparatus comprises means (223) for modifying the filtering characteristic by convolution with a pulse-shaped impulse response to inhibit lengthening of the channel response of the communications signal by the pre-filter (222) when the filtering characteristic is deployed in the pre-filter (222).

**15.** Apparatus according to claim 14, wherein said pulse is Gaussian.

**16.** Apparatus according to claim 14 or 15, wherein said pre-filter is a linear equaliser.

**Patentansprüche**

**1.** Vorrichtung (212) zum Aufbereiten eines Kommunikationssignals, das zum Entzerren durch einen Entzerrer bestimmt ist, wobei die Vorrichtung (212) ein Vorfilter (222) umfasst, der vor dem Entzerrer angeordnet ist, **dadurch gekennzeichnet, dass** die Vorrichtung des Weiteren ein Mittel (223) umfasst, um die Filtercharakteristik des Vorfilters durch Falten mit einer impulsgeformten Stoßantwort zu modifizieren, um eine Verlängerung der Kanalreaktion des Kommunikationssignals durch das Vorfilter (222) infolge einer Mehrpfadstruktur in dem Signal zu hemmen.

**2.** Vorrichtung nach Anspruch 1, die des Weiteren ein Filtermittel umfasst, das vor dem Vorfilter angeordnet ist und das dafür konfiguriert ist zu veranlassen, dass das Kommunikationssignal, an dem Vorfiltereingang, Energie in einer Frequenzregion jenseits der Nyquist-Grenze jenes Signals enthält, um eine Rückfaltung in dem Vorfilter hervorzurufen, die diese Verlängerung verhindert.

**3.** Vorrichtung nach Anspruch 1 oder 2, wobei das Modifizierungsmittel ein Mittel in Reihe mit dem Vorfilter umfasst, um auf das Kommunikationssignal eine Filterung anzuwenden, die eine impulsgeformte Stoßantwort aufweist, um diese Verlängerung durch das Vorfilter zu hemmen.

**4.** Vorrichtung nach einem der Ansprüche 1 bis 3, wobei der Impuls von Gaußscher Art ist.

**5.** Vorrichtung nach einem der Ansprüche 1 bis 4, wobei das Vorfilter ein linearer Entzerrer ist.

**6.** Verfahren zum Aufbereiten eines Kommunikationssignals, das zum Entzerren durch einen Entzerrer bestimmt ist, wobei das Verfahren das Vorfiltern des Kommunikationssignals vor dem Entzerrer umfasst, **dadurch gekennzeichnet, dass** das Verfahren des Weiteren umfasst, die Filtercharakteristik des Vorfilterungsschrittes durch Falten mit einer impulsgeformten Stoßantwort zu modifizieren, um eine Verlängerung der Kanalreaktion des Kommunikationssignals durch den Vorfilterungsschritt infolge einer Mehrpfadstruktur in dem Signal zu hemmen.

**7.** Verfahren nach Anspruch 6, das des Weiteren umfasst, das Kommunikationssignal vor dem Vorfilterungsschritt zu filtern, dergestalt, dass das Kommunikationssignal, das in den Vorfilterungsschritt eingespeist wird, Energie in einer Frequenzregion jenseits der Nyquist-Grenze des Signals enthält, um eine Rückfaltung in dem Vorfilterungsschritt hervorzurufen, die diese Verlängerung verhindert.

**8.** Verfahren nach Anspruch 6 oder 7, wobei der Modifizierungsschritt einen Schritt umfasst, an das Kommunikationssignal in Reihe mit dem Vorfilter eine Filterung anzulegen, die eine impulsgeformte Stoßantwort enthält, um jene Verlängerung durch das Vorfilter zu hemmen.

**9.** Verfahren nach Anspruch 7 oder 8, wobei der Impuls von Gaußscher Art ist.

**10.** Verfahren nach einem der Ansprüche 6 bis 9, wobei der Vorfilterungsschritt eine lineare Entzerrung des Kommunikationssignals ausführt.

**11.** Verfahren zum Modifizieren der Filtercharakteristik eines Vorfilters (222) für einen Entzerrer, wobei das Vorfilter (222) dafür konfiguriert ist, eine Filtercharakteristik an ein Kommunikationssignal anzulegen, das für eine Entzerrung durch den Entzerrer vorgesehen ist, **dadurch gekennzeichnet, dass** das Verfahren umfasst, eine Filtercharakteristik bereitzustellen, die in dem Vorfilter (222) angewendet werden soll, und die Filtercharakteristik durch Falten mit einer impulsgeformten Stoßantwort zu modifizieren, um eine Verlängerung der Kanalreaktion des Kommunikationssignals durch das Vorfilter zu hemmen, wenn die Filtercharakteristik in dem Vorfilter angewendet wird.

**12.** Verfahren nach Anspruch 11, wobei der Impuls von Gaußscher Art ist.

**13.** Verfahren nach Anspruch 11 oder 12, wobei das Vorfilter ein linearer Entzerrer ist.

**14.** Vorrichtung zum Modifizieren der Filtercharakteristik eines Vorfilters (222) für einen Entzerrer, wobei das Vorfilter (222) dafür konfiguriert ist, eine Filtercharakteristik an ein Kommunikationssignal anzulegen, das für eine Entzerrung durch den Entzerrer bestimmt ist, **dadurch gekennzeichnet, dass** die Vorrichtung ein Mittel (223) umfasst, um die Filtercharakteristik durch Falten mit einer impulsgeformten Stoßantwort zu modifizieren, um eine Verlängerung der Kanalreaktion des Kommunikationssignals durch das Vorfilter (222) zu hemmen, wenn die Filtercharakteristik in dem Vorfilter angewendet wird.

**15.** Vorrichtung nach Anspruch 14, wobei der Impuls von Gaußscher Art ist.

**16.** Vorrichtung nach Anspruch 14 oder 15, wobei das Vorfilter ein linearer Entzerrer ist.

**Revendications**

**1.** Appareil (212) pour conditionner un signal de communication destiné à l'égalisation par un égaliseur, l'appareil (212) comprenant un préfiltre (222) situé avant l'égaliseur, **caractérisé en ce que** l'appareil comprend également un moyen (223) pour modifier la caractéristique de filtrage du préfiltre par convolution avec une réponse par impulsion à forme d'impulsion pour empêcher l'allongement de la réponse de canal du signal de communication par le préfiltre (222) grâce à une structure à trajets multiples dans ledit signal.

**2.** Appareil selon la revendication 1, comprenant également un moyen de filtrage situé avant le préfiltre et disposé pour que le signal de communication, à l'entrée du préfiltre, contienne de l'énergie dans une région de fréquence au-delà de la limite de Nyquist de ce signal pour provoquer un repliement dans le préfiltre empêchant ledit allongement.

**3.** Appareil selon la revendication 1 ou 2, dans lequel le moyen de modification comprend un moyen en ligne avec le préfiltre pour appliquer au signal de communication un filtrage ayant une réponse par impulsion à forme d'impulsion pour empêcher ledit allongement par ledit préfiltre.

**4.** Appareil selon l'une quelconque des revendications 1 à 3, dans lequel ladite impulsion est Gaussienne.

**5.** Appareil selon l'une quelconque des revendications 1 à 4, dans lequel le préfiltre est un égaliseur linéaire.

**6.** Procédé de conditionnement d'un signal de communication destiné à l'égalisation par un égaliseur, le procédé comprenant le préfiltrage du signal de communication avant l'égaliseur, **caractérisé en ce que** le procédé comprend également la modification de la caractéristique de filtrage de l'étape de préfiltragexxx par convolution avec une réponse par impulsion à forme d'impulsion pour empêcher l'allongement de la réponse de canal du signal de communication par l'étape de préfiltrage due à la structure à trajets multiples dans ledit signal.

7.  Procédé selon la revendication 6, comprenant également le filtrage du signal de communication avant l'étape de préfiltrage de telle sorte que le signal de communication, fourni à l'étape de préfiltrage, contienne de l'énergie dans une région de fréquence au-delà de la limite de Nyquist du signal pour causer le repliement dans l'étape de préfiltrage qui empêche ledit allongement.

8.  Procédé selon la revendication 6 ou 7, dans lequel l'étape de modification comprend une étape d'application au signal de communication en ligne du filtrage de préfiltre ayant une réponse par impulsion à forme d'impulsion pour empêcher ledit allongement par ledit préfiltre.

9.  Procédé selon la revendication 7 ou 8, dans lequel ladite impulsion est Gaussienne.

10. Procédé selon l'une quelconque des revendications 6 à 9, dans lequel l'étape de préfiltrage réalise une égalisation linéaire du signal de communication.

11. Procédé de modification de la caractéristique de filtrage d'un préfiltre (222) pour un égaliseur, dans lequel le préfiltre (222) est disposé pour appliquer une caractéristique de filtrage à un signal de communication destiné à l'égalisation par l'égaliseur, **caractérisé en ce que** le procédé comprend la fourniture d'une caractéristique de filtrage conçue pour être déployée dans le préfiltre (222) et la modification de la caractéristique de filtrage par convolution avec une réponse par impulsion à forme d'impulsion pour empêcher l'allongement de la réponse de canal du signal de communication par le préfiltre quand la caractéristique de filtrage est déployée dans le préfiltre.

12. Procédé selon la revendication 11, dans lequel ladite impulsion est Gaussienne.

13. Procédé selon la revendication 11 ou 12, dans lequel ledit préfiltre est un égaliseur linéaire.

14. Appareil pour la modification de la caractéristique de filtrage d'un préfiltre (222) pour un égaliseur, dans lequel le préfiltre (222) est disposé pour appliquer une caractéristique de filtrage à un signal de communication destiné à l'égalisation par l'égaliseur, **caractérisé en ce que** l'appareil comprend un moyen (223) pour la modification de la caractéristique de filtrage par convolution avec une réponse par impulsion à forme d'impulsion pour empêcher l'allongement de la réponse de canal du signal de communication par le préfiltre (222) quand la caractéristique de filtrage est déployée dans le préfiltre (222) .

15. Appareil selon la revendication 14, dans lequel ladite impulsion est Gaussienne.

16. Appareil selon la revendication 14 ou 15, dans lequel ledit préfiltre est un égaliseur linéaire.

Fig. 1a

Fig. 1b

Fig. 1c

Fig. 2

EP 1 847 086 B1

dB

300

310

312

delay

Fig. 3

dB

400

410

412

delay

Fig. 4

dB

500

$\Delta_{1\text{-}3}$

$\Delta_{1\text{-}2}$

510

512

delay

Fig. 5

Fig. 6

Fig. 7

Fig. 8

Fig. 9

Fig. 10

Fig. 11

Fig. 12

**Fig. 13a**

**Fig. 13b**

**Fig. 13c**

| r → | INHIBITING FILTER | → | PRE-FILTER | → | DEMODULATION | → | ERROR DECODING | → |
|---|---|---|---|---|---|---|---|---|
| | 1400 | | 222e | | 224 | | 226 | |

Fig. 14

| r → | PRE-FILTER | → | INHIBITING FILTER | → | DEMODULATION | → | ERROR DECODING | → |
|---|---|---|---|---|---|---|---|---|
| | 222e | | 1500 | | 224 | | 226 | |

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1229699 A

### Non-patent literature cited in the description

- **John G. Proakis.** Digital Communications. Mc-Graw-Hill International Series
- **John G. Proakis.** Digital Communicatiorrs. Mc-Graw-Hill International Series
- **Forney, G., Jr.** Maximum-likelihood sequence estimation of digital sequences in the presence of intersymbol interference. *IEEE Transactions on Information Theory,* May 1972, vol. 18 (3), 363-378
- **Koch, W. ; Baier, A.** Optimum and sub-optimum detection of coded data disturbed by time-varying intersymbol interference [applicable to digital mobile radio receivers]. *Global Telecommunications Conference, 1990, and Exhibition. "Communications: Connecting the Future", GLOBECOM '90., IEEE,* 02 December 1990, vol. 3, 1679-1684

- **Hagenauer, J. ; Hoeher, P.** A Viterbi algorithm with soft-decision outputs and its applications. *Global Telecommunications Conference, 1989, and Exhibition. "Communications Technology for the 1990s and Beyond". GLOBECOM '89., IEEE,* 27 November 1989, vol. 3, 1680-1686
- **Eyuboglu, M. V. ; Qureshi, S.U.H.** Reduced-state sequence estimation with set partitioning and decision feedback. *IEEE Transactions on Communications,* January 1988, vol. 36 (1), 13-20
- **M. Barberis ; S. Heinen ; P. Guerra.** Design of an interference-resistant equaliser for EDGE cellular radio systems. *Vehicular Technology Conference 2002. Proceedings. VTC 2002-Fall. 2002 IEEE 56,* 24 September 2002, vol. 3, 1622-1626